# EUROPEAN PATENT SPECIFICATION

(11) **EP 2 916 369 B1**
(45) Date of publication and mention of the grant of the patent: **04.10.2017**
(21) Application number: 15158032.1
(22) Date of filing: 06.03.2015
(51) Int. Cl.: H01M 2/10, B60K 1/04

(54) **Battery pack for electric vehicle**
Batteriepack für ein Elektrofahrzeug
Bloc-batteries pour véhicule électrique

(30) Priority: 06.03.2014 JP 2014044049
(43) Date of publication of application: 09.09.2015
(73) Proprietor: Mitsubishi Jidosha Kogyo Kabushiki Kaisha, Tokyo 108-8410 (JP)
(72) Inventor: Loo, Weng Leong, Tokyo, 108-8410 (JP); Takasaki, Seiichi, Tokyo, 108-8410 (JP)
(74) Representative: Regimbeau

(56) References cited:
- EP-A1- 2 479 818
- EP-A1- 2 623 353
- EP-A1- 2 685 523

## Description

### TECHNICAL FIELD

The present disclosure relates to a battery pack for an electric vehicle, and more specifically, to a battery pack for an electric vehicle that can enhance the strength of the entire side wall of a tray constituting the battery pack.

### BACKGROUND

A battery pack for an electric vehicle is to supply electric power to an electric drive mounted on an electric vehicle, and is disposed in a lower region of a floor panel. The battery pack includes a tray and a cover. The tray and the cover are joined to each other at a horizontal plane to constitute a box element. The tray has a box-like shape that has an opening at un upper side. The tray includes a bottom wall and an outer peripheral wall and is formed by pressing a steel sheet, for instance. Further, an outer frame is disposed on a side of the tray. The outer frame is to secure rigidity of the tray, and is disposed so as to protrude outwardly in the horizontal direction from a lower region of the side wall to be spot welded to the outer bottom surface and the side wall surface of the tray. In this way, a closed cross section of a rectangular shape is formed on the outer side in the horizontal direction of the tray, as described in Patent Document 1 (Japanese Unexamined Patent Application No. 2010-284984), for instance.

Another known battery pack for an electric vehicle includes a tray formed of resin having a flange section on an upper surface of an outer peripheral wall and a cover joined to the tray at a horizontal plane, the tray and the cover being fastened to an upper surface of an outer frame formed of metal. This metallic outer frame of the battery pack is formed so as to be hollow inside. In this way, the outer frame efficiently absorbs collision energy upon being hit on a lateral side of the electric vehicle, which makes it possible to protect the battery pack and to reduce the weight of the battery pack, as described in Patent Document 2 (Japanese Patent No. 5013140).

However, the outer frame described in the above Patent Document 1 requires a flange (margin) for welding the outer frame to the side wall surface of the tray. Thus, the outer frame cannot be welded so as to cover the entire side wall surface of the tray, which makes it difficult to enhance the strength of the entire side wall of the tray.

Further, the tray described in the above Patent Document 2 is formed of resin, and to fasten a flange disposed on the upper surface of the outer peripheral wall to the outer frame formed of metal. Thus, the strength of the entire side wall of the tray is not enhanced.

In view of the above issues, an object of the present invention is to provide a battery pack for an electric vehicle that can enhance the strength of the entire side wall of a tray.

At least one embodiment of the present invention provides a battery pack for an electric vehicle, mounted on an electric vehicle, including: a tray which accommodates a battery and which is formed in a box-like shape having an opening on an upper side; and at least one outer frame disposed on an outer side of a side wall surface of the tray, the outer frame extending along the side wall surface and being welded thereto so as to cover the side wall surface. The at least one outer frame is constituted of a plate member or a combination of plate members. Also, the at least one outer frame includes: a first protruding section welded to an outer bottom surface of the tray; a second protruding section positioned above the first protruding section and formed to protrude outwardly from the tray; an outer section connecting the first protruding section and the second protruding section at a position outwardly spaced from the side wall surface of the tray; and an inner section extending from the second protruding section toward the first protruding section and being welded to the side wall surface of the tray. The first protruding section, the second protruding section, the outer section and the inner section form a part of a closed cross section of the at least one outer frame. Further, the outer section includes an aperture through which a welding gun is insertable. The welding gun is to weld the side wall surface of the tray and the inner section.

With the above configuration, the welding gun is inserted through the aperture disposed on the outer section of the outer frame, so that the side wall surface of the tray and the inner section are welded to each other. Thus, the outer frame can have a large and closed cross section at the outer side of the tray without reducing the strength against the load from the outside. As a result, it is possible to enhance the strength of the entire side wall of the tray.

In one embodiment of the present invention, the battery pack for an electric vehicle further includes at least one bracket welded to an outer surface of the outer section so as to close the aperture. The at least one bracket is mounted to a vehicle-body member which extends in a vehicle front-rear direction or a vehicle width direction of the electric vehicle.

In this way, the bracket can enhance the strength against the load in the extending direction of the outer section of the outer frame. As a result, it is possible to further enhance the strength of the entire side wall of the tray.

In one embodiment of the present invention, the at least one outer frame is welded to the side wall surface at each of opposite sides in the vehicle width direction of the tray. The vehicle-body member is a cross member extending in the vehicle width direction. Further, the cross member is disposed in a lower region of the tray so as to connect one of the at least one bracket disposed on one side in the vehicle width direction of the tray and another one of the at least one bracket disposed on an opposite side.

In this way, it is possible to further enhance the strength, in the vehicle width direction, of the tray with the cross member.

In one embodiment of the present invention, the battery pack for an electric vehicle further includes an inner frame disposed on an inner surface of a side wall of the tray, the inner frame extending along the side wall and being welded to the side wall.

In this way, it is possible to fruther enhance the strength of the side wall of the tray with the inner frame.

In one embodiment of the present invention, the battery pack for an electric vehicle further includes a partition part inside the tray for partitioning an accommodating space of the battery. The partition part extends in a direction that intersects an extending direction of the at least one outer frame and has an end portion which is in contact with the inner surface of the side wall of the tray.

In this way, it is possible to further enhance the strength of the side wall of the tray with the partition part.

In one embodiment of the present invention, the aperture is disposed on a position offset from the partition part in an extending direction of the partition part.

In this way, the aperture is disposed on a position offset from the partition part in the extending direction of the partition part, so that the outer frame has a closed cross section in the extending direction of the partition part. As a result, it is possible to restrict deformation of the tray even when a load is applied to the tray from an obliquely upper side or an obliquely lower side in the vehicle width direction.

In one embodiment of the present embodiment, the aperture is disposed on a position overlapping with the partition part in an extending direction of the partition part.

In this way, the aperture is disposed on a position overlapping with the partition part in an extending direction of the partition part. As a result, it is possible to restrict deformation of the tray even when a load is applied to the tray from an obliquely upper side or an obliquely lower side in the vehicle width direction, because the partition part resists such a load.

As described above, according to at least one embodiment of the present invention, the welding gun is inserted through the aperture disposed on the outer section of the outer frame so that the side wall surface of the tray and the inner section are welded to each other. Thus, the outer frame can have a large and closed cross section on the outer side of the tray without reducing the strength against a load from outside. As a result, it is possible to enhance the strength of the entire side wall of the tray.

FIG. 1 is a schematic diagram of an electric vehicle equipped with a battery pack for an electric vehicle according to one embodiment of the present invention.
FIG. 2 is a perspective view of the battery pack for an electric vehicle illustrated in FIG. 1.
FIG. 3 is a perspective view of a tray illustrated in FIG. 2.
FIG. 4 is a cross-sectional view taken along line IV- IV in FIG. 2.
FIG. 5 is a partial view of the battery pack illustrated in FIG. 4.
FIG. 6 is an illustration of an exemplary arrangement (first arrangement) of apertures illustrated in FIGs. 4 and 5.
FIG. 7 is an illustration of an exemplary arrangement (second arrangement) of apertures illustrated in FIGs. 4 and 5.
FIG. 8 is a cross-sectional view taken along line VIII-VIII in FIG. 3.
FIG. 9 is a partial view of the battery pack illustrated in FIG. 8.
FIG. 10 is a partial perspective view of the battery pack illustrated in FIG. 2, where a bracket is indicated by dotted lines.
FIG. 11 is a partial perspective view of the battery pack illustrated in FIG. 2, where a bracket is indicated by solid lines.
FIG. 12 is a cross-sectional view of welding positions for the tray illustrated in FIG. 5.

A battery pack for an electric vehicle according to one embodiment of the present invention will be described in detail referring to the accompanying drawings. The invention is not limited to the embodiment described below.

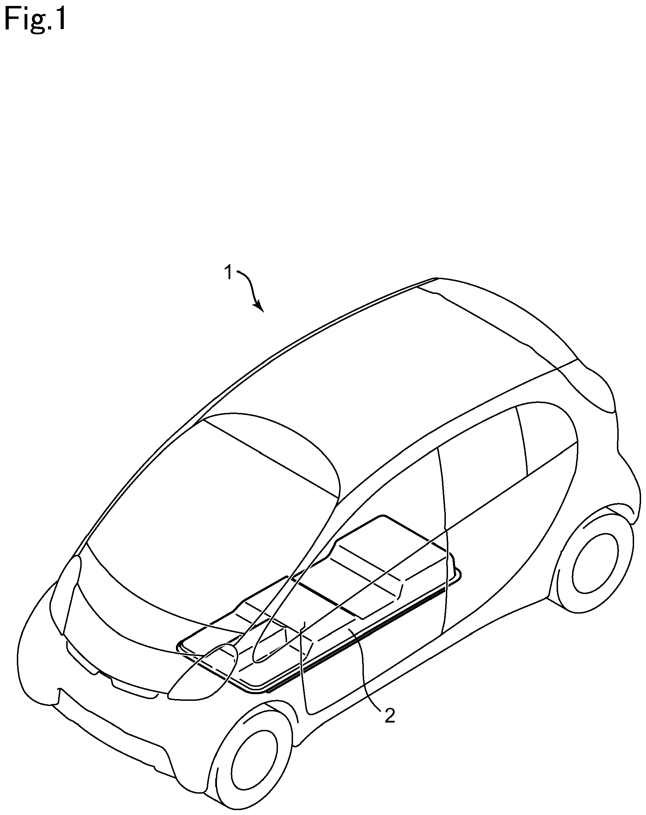

FIG. 1 is a schematic diagram of an electric vehicle equipped with a battery pack for an electric vehicle according to one embodiment of the present invention. Hereinafter, a battery pack mounted to a small-sized electric vehicle will be described as an example. The present invention, however, is not limited to this and the battery pack may be mounted to general electric vehicles including a sporty electric vehicle.

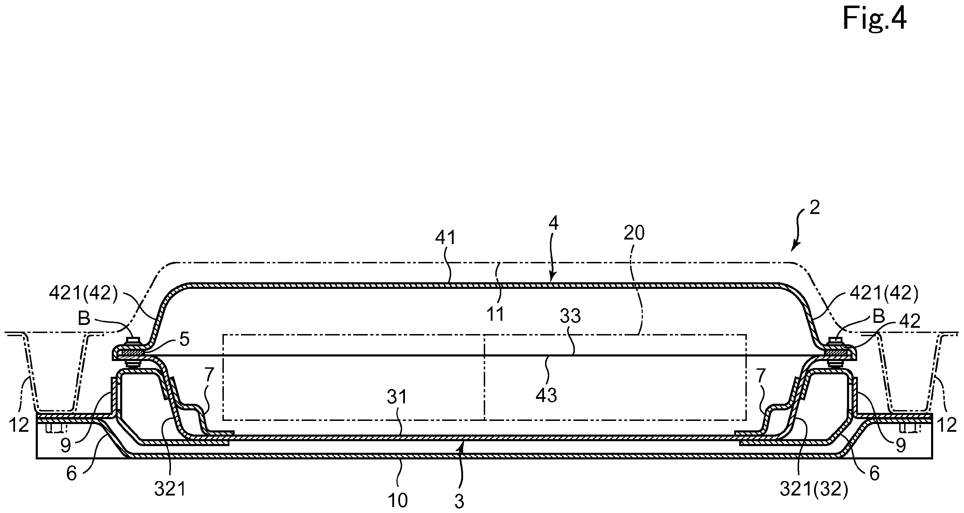

As illustrated in FIG. 1, a battery pack 2 for an electric vehicle according to one embodiment of the present invention is to supply electric power to an electric drive (power unit, not illustrated) mounted to an electric vehicle 1. The battery pack 2 is disposed in a lower region of a floor panel 11 (see FIG. 4). Electric power is supplied to the battery pack 2 from a quick charging port (not illustrated) disposed on the vehicle rear-lateral side. Alternately, electric power having been supplied to an on-board charger (not illustrated) from a regular charging port (not illustrated) disposed on the vehicle rear-lateral side is supplied to the battery pack 2. In this way, the battery pack 2 is charged with electric power. Also, the battery pack 2 is connected to the power unit (not illustrated) including the electric drive such as a motor, a heater (not illustrated), and an A/C compressor (not illustrated) so as to supply electric power thereto. As a result, electric power stored in the battery pack 2 is used.

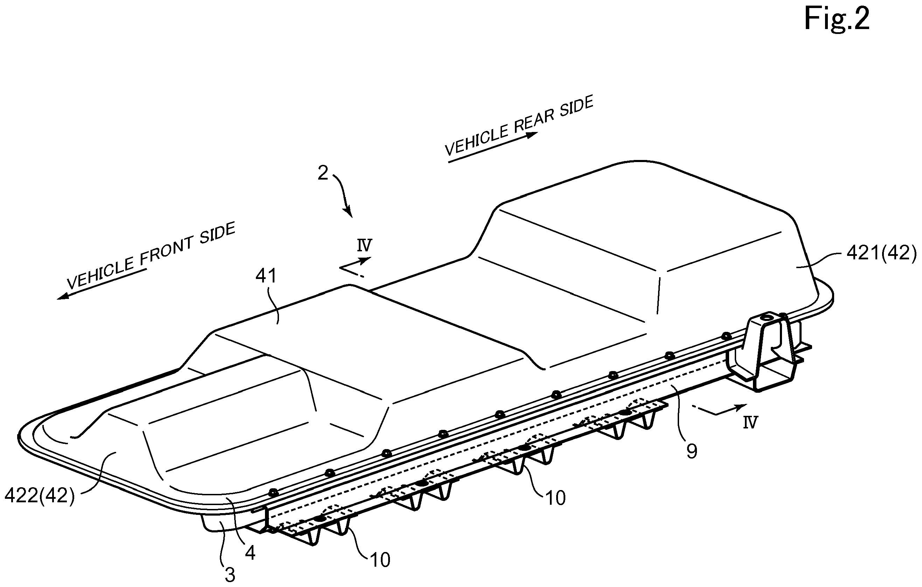

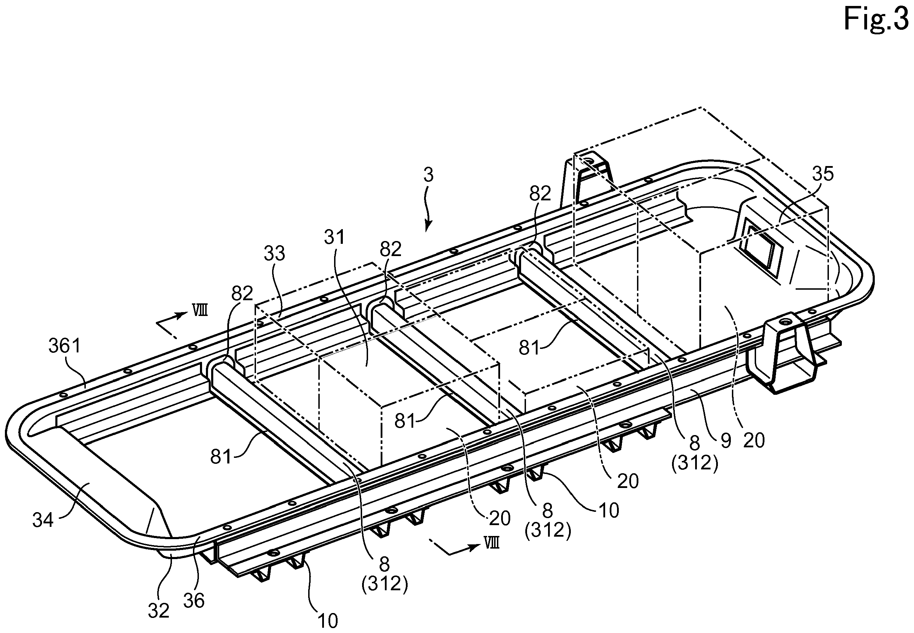

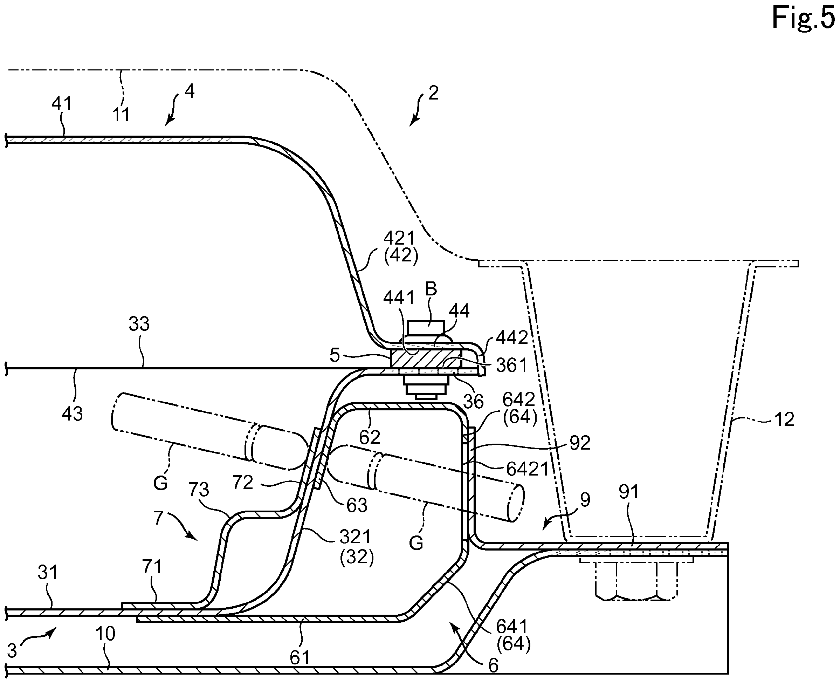

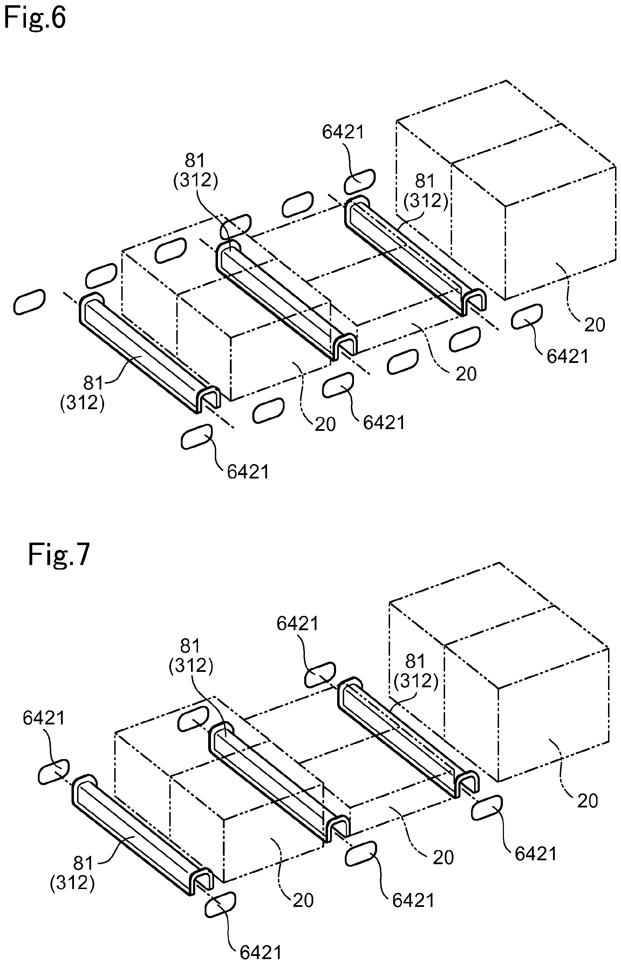

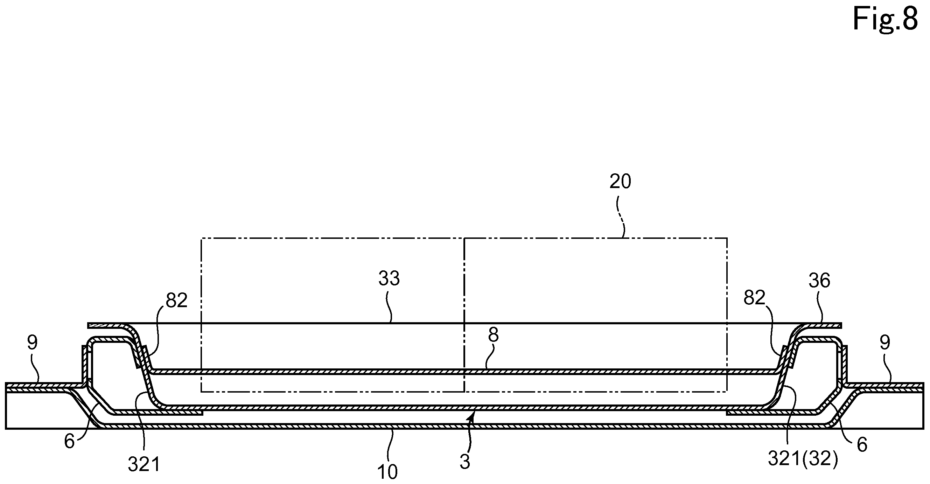

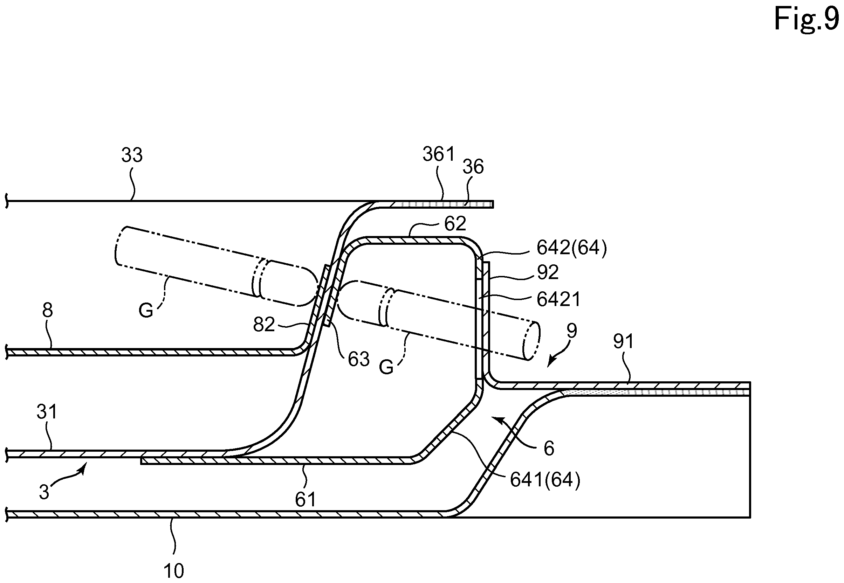

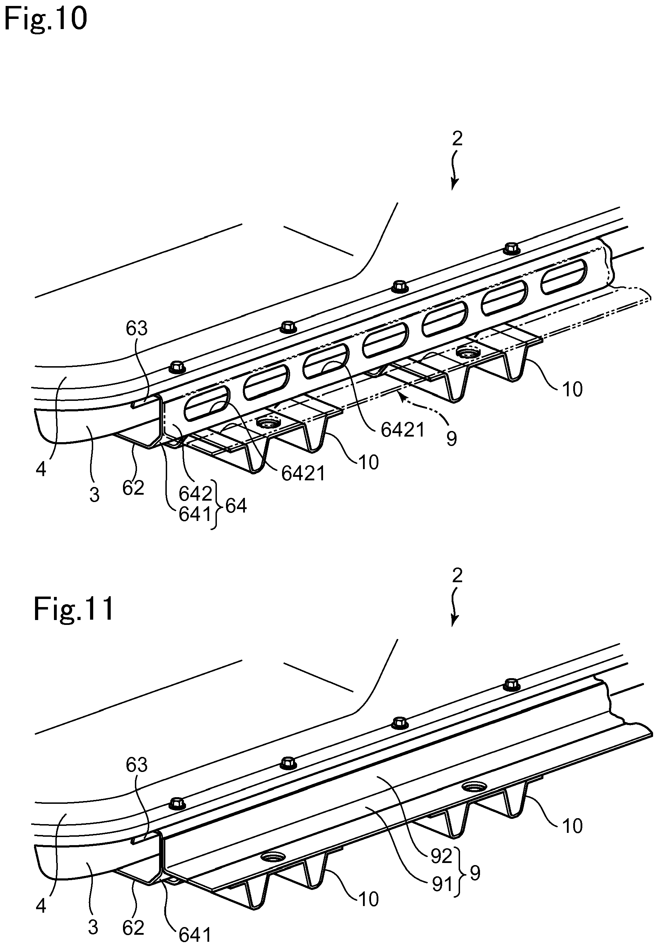

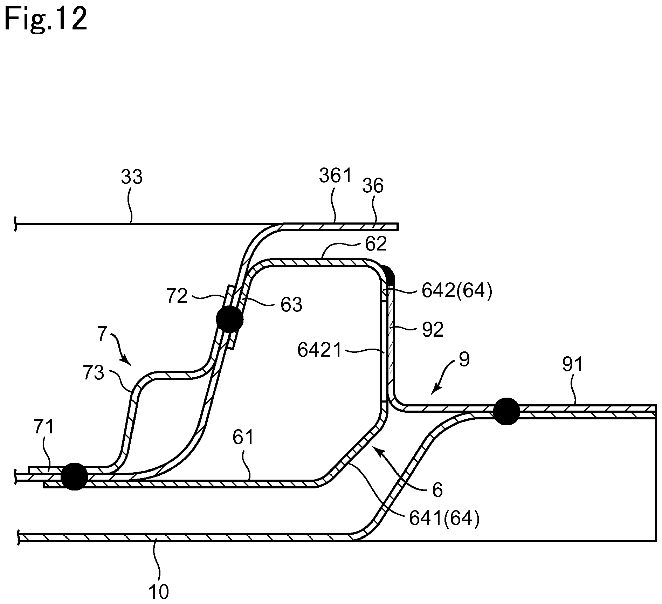

FIG. 2 is a perspective view of the battery pack illustrated in FIG. 1. FIG. 3 is a perspective view of a tray illustrated in FIG. 2. FIG. 4 is a cross-sectional view taken along line IV- IV in FIG. 2. FIG. 5 is a partial view of the battery pack illustrated in FIG. 4. FIGs. 6 and 7 are each an illustration of an exemplary arrangement of apertures illustrated in FIGs. 4 and 5. FIG. 8 is a cross-sectional view taken along line VIII-VIII in FIG. 3. FIG. 9 is a partial view of the battery pack illustrated in FIG. 8. FIGs. 10 and 11 are partial perspective views of the battery pack illustrated in FIG. 2. In FIG. 10, a bracket is indicated by dotted lines. In FIG. 11, a bracket is indicated by solid lines. FIG. 12 is a cross-sectional view of welding positions, indicated by solid circles, for the tray illustrated in FIG. 5.

As illustrated in FIG. 2, the battery pack 2 includes a tray 3 and a cover 4. The tray 3 and the cover 4 are joined to each other at a horizontal plane to constitute a box element.

As illustrated in FIG. 3, the tray 3 is to accommodate a battery 20. The tray 3 is shaped into a single piece by pressing a relatively thin steel sheet, and is formed in a box-like shape having an opening 33 at un upper side. The bottom wall 31 of the tray 3 is formed in a rectangular shape elongated in the vehicle front-rear direction.

Further, partition parts 312 are disposed inside the tray 3. The partition parts 312 are to partition the accommodating space inside the battery 20, and a plurality of, specifically three in the present embodiment, partition parts 312 are arranged in the vehicle front-rear direction. Each partition part 312 is disposed so as to extend in the vehicle width direction. One end of each partition part 312 is joined to one of the side walls of the tray 3, while the opposite end of each partition part 312 is joined to the opposite one of the side walls of the tray 3. In this way, the partition parts 312 can also enhance the strength of the tray 3. Further, the partition parts 312 constitute cross beams 8 which will be described below.

As illustrated in FIG. 4, the tray 3 includes an outer peripheral wall 32 surrounding a bottom wall 31. The outer peripheral wall 32 spreads gradually from the bottom wall 31 toward the opening 33, so that the wall surfaces of side walls 321 disposed in the vehicle width direction have inclined surfaces. Further, as illustrated in FIG. 3, a front connector-attachment section 34 is disposed in a region of the outer peripheral wall 32 at the vehicle front side, while a rear connector-attachment section 35 is disposed in a region of the outer peripheral wall 32 at the vehicle rear side.

A joint section 36 is disposed around the opening 33. The joint section 36 is a portion to which the cover 4 is joined, and is disposed over the entire periphery of the opening 33. The joint section 36 protrudes outwardly from the opening 33, so that a horizontal joint surface 361 is formed on the upper surface of the joint section 36.

As illustrated in FIG. 2, the cover 4 is shaped into a single piece by pressing a relatively thin steel sheet, similarly to the tray 3. The cover is formed in a box-like shape having the substantially same size as the size of the tray 3. The cover 4 is slightly deeper than the tray 3 and has an opening 43 at the lower side. The top face (top wall) 41 is formed in a rectangular shape elongated in the vehicle front-rear direction, similarly to the tray 3. Further, the height direction of the cover 4 is formed corresponding to a compartment space provided inside the electric vehicle 1, more specifically, to the floor panel 11. In the present embodiment, the height direction of the cover 4 is formed to be high in the lower regions of the driver's seat, the front passenger's seat (front seat), and the rear seat, and to be low in regions in front of the lower regions.

An outer peripheral wall 42 is formed around the top face 41 of the cover 4. The outer peripheral wall 42 gradually spreads from the top face 41 toward the opening 43, so that the wall surfaces of lateral walls 421 provided in the vehicle width direction, the wall surface of a front wall 422 provided on the vehicle front side, and the wall surface of a rear wall provided on the vehicle rear side have inclined surfaces.

Further, as illustrated in FIG. 4, a joint section 44 is disposed around the opening 43. The joint section 44 is a section joined with the tray 3 and disposed over the entire periphery of the opening 43. As illustrated in FIG. 5, the joint section 44 protrudes outwardly from the opening 43, so that a horizontal joint surface 441 is formed on the lower surface of the joint section 44. Also, a lip 442 extending toward a lower region of the horizontal joint surface 441 is formed on the edge of the horizontal joint surface 441.

Further, the battery pack 2 includes a gasket 5 disposed between the tray 3 and the cover 4. The gasket 5 is to fill a gap formed between the tray 3 and the cover 4. Specifically, the gasket 5 is disposed between the joint surface 361 formed on the upper surface of the joint section 36 of the tray 3 and the joint surface 441 formed on the lower surface of the joint section 44 of the cover 4. The gasket 5 includes an elastic body such as a rubber. The tray 3 and the cover 4 are fastened to each other by screws B, so that the gasket 5 is compressed to deform, thereby filling the gap between the tray 3 and the cover 4.

As illustrated in FIGs. 4 and 5, the tray 3 further includes outer frames 6 at the outer sides. Each outer frame 6 is to resist the load from the outer side in the vehicle width direction, and is formed by pressing a piece of steel sheet which is thicker than the tray 3. The outer frames 6 are disposed so as to extend along the side wall surface of the tray 3 so as to cover the side wall surface. In the example illustrated in FIGs. 4 and 5, the outer frames 6 are disposed on the outer sides, or more specifically, the opposite outer sides, in the vehicle width direction, extending along the side wall surface of the tray 3 in the vehicle front-rear direction. As illustrated in FIG. 5, each outer frame 6 includes the first protruding section 61, the second protruding section 62, an inner section 63, and an outer section 64. The first protruding section 61 is to resist the load from the outer side in the vehicle width direction, extending horizontally in the vehicle width direction to be welded to the outer bottom, more specifically, to the outer bottom surface, of the tray 3. The second protruding section 62 is to resist the load from the outer side in the vehicle width direction, similarly to the first protruding section 61, and is disposed above and parallel to the first protruding section 61. The inner section 63 is to weld the outer frame 6 to the side wall 321 of the tray 3, extending slantwise from the inner side of the second protruding section 62 toward the first protruding section 61 to be welded to the side wall 321, more specifically, to the outer surface of the side wall 321, of the tray 3. The outer section 64 is to form a closed cross section and is disposed between the outer side of the first protruding section 61 and the outer side of the second protruding section 62 to form a closed cross section with the side wall 321 of the tray 3, the first protruding section 61, the second protruding section 62, and the inner section 63. The outer section 64 according to the present embodiment includes an inclined portion 641 on the first protruding portion side and a vertical portion 642 on the second protruding section side. The vertical portion 642 includes a plurality of apertures 6421 facing the inner section 63 arranged in the vehicle front-rear direction. The apertures 6421 are to weld the inner section 63 and the side wall surface of the tray 3 with each other, and are each formed to have a size which allows a welding gun G for spot welding to be inserted through the apertures 6421. The apertures 6421 may be disposed anywhere in the vehicle front-rear direction.

For instance, as illustrated in FIG. 6, the apertures 6421 may be disposed on positions different from the positions, in the vehicle front-rear direction, of the partition parts 312 disposed on the tray 3. In other words, the apertures 6421 may be disposed on the positions offset from the partition parts 312 in the extending direction of the partition parts 312. This is the first arrangement. When the apertures 6421 are disposed on the positions different from the positions of the partition parts 312 in the vehicle front-rear direction as described above, the outer frames 6 each have a closed cross section at the positions, in the vehicle front-rear direction, of the partition parts 312. In this way, deformation of the tray 3 is restricted even if the load is applied to the tray 3 from an obliquely upper side or an obliquely lower side in the vehicle width direction.

For instance, as illustrated in FIG. 7, the apertures 6421 may be disposed on the positions, in the vehicle front-rear direction, of the partition parts 312. In other words, the apertures 6421 may be disposed on the positions overlapping with the partition parts in the extending direction of the partition parts. This is the second arrangement. With the apertures 6421 being disposed on the positions, in the vehicle front-rear direction, of the partition parts 312 as described above, deformation of the tray 3 is restricted because the partition parts 312 resist the load even if the load is applied to the tray 3 from an obliquely upper side or an obliquely lower side in the vehicle width direction.

Furthermore, as illustrated in FIGs. 4 and 5, inner frames 7 are disposed on the inner sides, or specifically, the opposite inner sides, in the vehicle width direction of the tray 3. The inner frames 7 are to resist the load from the outer side in the vehicle width direction, similarly to the outer frames 6, and are each formed by pressing a steel sheet which is the substantially same thickness as the tray 3. A plurality of, specifically, four on each side in the present invention, inner frames 7 are disposed in the vehicle front-rear direction so as to leave margins for attaching the cross beams 8, which will be described below. As illustrated in FIG. 5, each inner frame 7 includes a bottom section 71, a side section 72, and a bend section 73. The bottom section 71 is to be welded to the inner bottom of the tray 3 and extends in the horizontal direction to be welded to the inner bottom, or more specifically, to the inner bottom surface, of the tray 3. The side section 72 is to be welded to the side wall 321 of the tray 3 and extends along the side wall 321 of the tray 3 to be welded to the side wall 321, or more specifically, to the inner surface of the side wall 321, of the tray 3. The bend section 73 is to form a closed cross section between the tray 3 and the inner frame 7, and is disposed between the bottom section 71 and the side section 72 so as to be bended, forming a closed space between the inner frame 7 and the tray 3.

The above described outer frames 6 and inner frames 7 are overlapped with the tray 3 and spot welded to the tray 3 (see FIG. 5). Specifically, the outer frames 6 and the inner frames 7 are each welded at the side wall 321 and the bottom wall 31 of the tray 3. As a result, the outer frames 6 and the inner frames 7 are joined to the tray 3 (see FIG. 12).

As illustrated in FIG. 3, the cross beams 8 are disposed between one of the side walls 321 and the opposite one of the side walls 321 on the inner side of the tray 3. The cross beams 8 are to resist the load from the outer side in the vehicle width direction, and are each attached between two of the inner frames 7 as described above. Each cross beam 8 is formed by pressing a steel sheet which has the substantially same thickness as the tray 3. Each cross beam 8 is formed in a gutter shape having an opening at a lower side. Each cross beam 8 includes flanges 81 to be joined to the bottom wall 31 of the tray 3 at the lower end portions. Further, as illustrated in FIG. 8, each cross beam 8 includes flanges 82, each welded to the corresponding side wall 321, at one end (left end) and the opposite end (right end). As illustrated in FIG. 9, the cross beams 8 are overlapped with the tray 3 to be spot welded along with the outer frames 6. In this way, the cross beams are joined to the tray 3.

As illustrated in FIG.s 10 and 11, brackets 9 are disposed on the outer sides, more specifically, the opposite outer sides, of the outer frames 6. The brackets 9 are to attach the battery pack 2 to side members 12 disposed on the electric vehicle 1. Each bracket 9 is formed by pressing a steel sheet which is thicker than the outer frames 6. The brackets 9 are disposed along the outer frames 6 in the vehicle front-rear direction. As illustrated in FIGs. 10 and 11, each bracket 9 is formed in an L-shape, including a horizontal section 91 and a vertical section 92. As illustrated in FIG. 5, the horizontal section 91 is to be attached to the side member 12 serving as a vehicle-body member which constitutes a framework of the vehicle body, and extends in the vehicle width direction. The vertical section 92 is to be welded to the vertical portion 642 of the outer section 64 of each outer frame 6, and extends in the vertical direction. The vertical section 92 is spot-welded or arc-welded to the outer section 64, or more specifically, to the vertical portion 642, of the outer frame 6. The apertures 6421 disposed on the vertical portion 642 are closed by the vertical section 92 (see FIG. 12).

Further, as illustrated in FIG. 5, cross members 10 are disposed at the lower region in the vehicle width direction of the tray 3. Each cross members 10 is a vehicle-body member disposed in the vehicle width direction and constitutes a framework of the vehicle body. To the cross members 10 according to the present embodiment, the bracket 9 disposed on one side (left side) in the vehicle width direction of the tray 3 and the bracket 9 disposed on the opposite side (right side) are welded (see FIG. 12).

As illustrated in FIG. 5, for the battery pack 2 for an electric vehicle according to the above embodiment of the present invention, the welding gun G is inserted through the apertures 6421 disposed on the vertical portion 642 of the outer section 64 of the outer frame 6, so that the inner section 63 is welded (spot welded) to the side wall 321, or more specifically, to the outer surface of the side wall 321, of the tray 3. Accordingly, each outer frame 6 can have a large and closed cross section on the outer side in the vehicle width direction of the tray 3 without reducing the strength with respect to the load from the outer side in the vehicle width direction. As a result, it is possible to enhance the strength of the entire side face of the tray 3.

Further, since the battery pack 2 includes the brackets 9 welded to the outer sides of the outer sections 64 of the outer frames 6 to close the apertures, the brackets 9 can enhance the strength against the load in the extending direction of the outer sections 64 of the outer frames 6, more specifically, the extending direction, which is the vertical direction, of the vertical portions 642. As a result, it is possible to enhance the strength of the entire side face of the tray 3.

Further, since the bracket 9 disposed on one side and the bracket 9 disposed on the opposite side in the vehicle width direction of the tray 3 are mounted to the cross members 10 disposed at the lower region of the tray 3 in the vehicle width direction, it is possible to enhance the strength of the tray 3 in the vehicle width direction with the cross members 10.

Further, since the battery pack 2 includes the inner frames 7 welded to the inner sides in the vehicle width direction of the tray 3 to resist the load from the outer side in the vehicle width direction, it is possible to further enhance the strength of the side face of the tray with the inner frames 7.

Further, as illustrated in FIG. 3, since the battery pack 2 includes the cross beams 8 disposed between one of the side walls 321 on the inner side of the tray 3 and the opposite one of the side walls 321 to resist the load from the outer side in the vehicle width direction, it is possible to further enhance the strength of the side face of the tray with the cross beams 8.

In the above described embodiment of the present invention, each outer frame 6 is formed by pressing a piece of steel sheet which is thicker than the tray 3. However, the outer frames 6 are not limited to this. For example, more than one piece of steel sheet may be pressed and combined, or more than one piece of steel sheet may be combined without being pressed.

Also, in the above described embodiment of the present invention, the outer frames 6 are mounted to the side wall surface at the opposite sides in the vehicle width direction of the tray 3. However, this is not limitative and the outer frames 6 may be mounted to the side walls surface at the opposite sides in the vehicle front-rear direction of the tray 3. In this case, it is possible to form a large and closed cross section on each outer side in the vehicle front-rear direction of the tray 3, which makes it possible to enhance the strength of the entire side face of the tray 3.

As described above, the battery pack for an electric vehicle according to one embodiment of the present invention is capable of enhancing the strength of the entire side face of the tray, and thus suitable for a battery pack for an electric vehicle in which the thickness of the tray is set small.

## Claims

1. A battery pack (2) for an electric vehicle, mounted on an electric vehicle (1), comprising:
a tray (3) which accommodates a battery and which is formed in a box-like shape having an opening on an upper side; and
at least one outer frame (6) disposed on an outer side of a side wall surface (321) of the tray (3), the outer frame (6) extending along the side wall surface and being welded to the side wall surface so as to cover the side wall surface,
wherein the at least one outer frame (6) is constituted of a plate member or a combination of plate members, the at least one outer frame (6) including:
a first protruding section (61) welded to an outer bottom surface of the tray (3);
a second protruding section (62) positioned above the first protruding section (61) and formed to protrude outwardly from the tray (3);
an outer section (64) connecting the first protruding section (61) and the second protruding section (62) at a position outwardly spaced from the side wall surface of the tray (3); and
an inner section (63) extending from the second protruding section (62) toward the first protruding section (61) and being welded to the side wall surface of the tray (3),
wherein the first protruding section (61), the second protruding section (62), the outer section (64) and the inner section (63) form a part of a closed cross section of the at least one outer frame (6),
wherein the outer section (64) includes an aperture (6421) facing the inner section (63), and wherein the aperture (6421) is to weld the inner section (63) and the side wall surface of the tray (3) with each other, and is formed to have a size which allows a welding gun (G) for spot welding to be inserted through the aperture (6421).

2. The battery pack for an electric vehicle according to claim 1, further comprising
at least one bracket (9) welded to an outer surface of the outer section (64) so as to close the aperture (6421), the at least one bracket (9) being mounted to a vehicle-body member (10) which extends in a vehicle front-rear direction or a vehicle width direction of the electric vehicle (1).

3. The battery pack for an electric vehicle according to claim 2,
wherein the at least one outer frame (6) is welded to the side wall surface of the tray (3) at each of opposite sides in the vehicle width direction of the tray (3),
wherein the vehicle-body member (10) is a cross member (10) extending in the vehicle width direction, and
wherein the cross member (10) is disposed in a lower region of the tray (3) so as to connect one of the at least one bracket (9) disposed on one side in the vehicle width direction of the tray (3) and another one of the at least one bracket (9) disposed on an opposite side.

4. The battery pack for an electric vehicle according to any one of claims 1 to 3, further comprising
an inner frame (7) disposed on an inner surface of a side wall of the tray (3), the inner frame (7) extending along the side wall and being welded to the side wall.

5. The battery pack for an electric vehicle according to any one of claims 1 to 4, further comprising a partition part (8) inside the tray (3) for partitioning an accommodating space of the battery,
wherein the partition part (8) extends in a direction which intersects an extending direction of the at least one outer frame (6) and has an end portion which is in contact with the inner surface of the side wall of the tray (3).

6. The battery pack for an electric vehicle according to claim 5,
wherein the aperture (6421) is disposed on a position offset from the partition part (8) in an extending direction of the partition part (8).

7. The battery pack for an electric vehicle according to claim 5,
wherein the aperture (6421) is disposed on a position overlapping with the partition part (8) in an extending direction of the partition part (8).

## Patentansprüche

1. Batteriepack (2) für ein Elektrofahrzeug, montiert auf einem Elektrofahrzeug (1), aufweisend:
einen Trog (3), der eine Batterie aufnimmt, und der in kastenähnlicher Form mit einer Öffnung auf einer oberen Seite ausgebildet ist; und
mindestens einen äußeren Rahmen (6), der auf einer äußeren Seite einer Seitenwandfläche (321) des Troges (3) angeordnet ist, wobei sich der äußere Rahmen (6) entlang der Seitenwandfläche erstreckt und an der Seitenwandfläche angeschweißt wird, um die Seitenwandfläche zu bedecken,
wobei der mindestens eine äußere Rahmen (6) aus einem Plattenelement oder einer Kombination von Plattenelementen gebildet ist, wobei der mindestens eine äußere Rahmen (6) Folgendes aufweist:
einen ersten vorstehenden Abschnitt (61), der an einer äußeren Bodenfläche des Troges (3) angeschweißt ist;
einen zweiten vorstehenden Abschnitt (62), der oberhalb des ersten vorstehenden Abschnitts (61) positioniert und so ausgebildet ist, dass er vom Trog (3) nach außen vorsteht;
einen äußeren Abschnitt (64), der den ersten vorstehenden Abschnitt (61) mit dem zweiten vorstehenden Abschnitt (62) in einer nach außen von der Seitenwandfläche des Troges (3) beabstandeten Position verbindet; und
einen inneren Abschnitt (63), der sich vom zweiten vorstehenden Abschnitt (62) zum ersten vorstehenden Abschnitt (61) erstreckt und an der Seitenwandfläche des Troges (3) angeschweißt ist;
wobei der erste vorstehende Abschnitt (61), der zweite vorstehende Abschnitt (62), der äußere Abschnitt (64) und der innere Abschnitt (63) einen Teil eines geschlossenen Querschnitts des mindestens einen äußeren Rahmens (6) bilden,
wobei der äußere Abschnitt (64) eine zum inneren Abschnitt (63) gerichtete Öffnung (6421) aufweist und wobei die Öffnung (6421) zum Verschweißen des inneren Abschnitts (63) mit der Seitenwandfläche des Troges (3) dient und so ausgebildet ist, dass sie eine Größe aufweist, die das Einführen einer Schweißpistole (G) durch die Öffnung (6421) zum Punktschweißen gestattet.

2. Batteriepack nach Anspruch 1 für ein Elektrofahrzeug, ferner aufweisend
mindestens eine Klammer (9), die an einer Außenfläche des Außenabschnitts (64) angeschweißt ist, um die Öffnung (6421) zu schließen, wobei die mindestens eine Klammer (9) an einem Fahrzeugkarosserieelement (10) befestigt ist, das sich in einer Fahrzeug-Vor-Rückwärtsrichtung oder einer Fahrzeugbreitenrichtung des Elektrofahrzeugs (1) erstreckt.

3. Batteriepack nach Anspruch 2 für ein Elektrofahrzeug,
wobei der mindestens eine äußere Rahmen (6) an der Seitenwandfläche des Troges (3) auf jeweils gegenüberliegenden Seiten in der Fahrzeugbreitenrichtung des Troges (3) angeschweißt ist,
wobei das Fahrzeugkarosserieelement (10) ein Querelement (10) ist, das sich in der Fahrzeugbreitenrichtung erstreckt, und
wobei das Querelement (10) in einem unteren Bereich des Troges (3) angeordnet ist, um eine der mindestens einen, auf einer Seite in der Fahrzeugbreitenrichtung des Troges (3) angeordneten Klammern (9) mit einer anderen der auf einer gegenüberliegenden Seite angeordneten Klammern (9) zu verbinden.

4. Batteriepack nach einem der Ansprüche 1 bis 3 für ein Elektrofahrzeug, ferner aufweisend
einen inneren Rahmen (7), der auf einer inneren Seite einer Seitenwand des Troges (3) angeordnet ist, wobei der innere Rahmen (7) an der Seitenwand angeschweißt ist.

5. Batteriepack nach einem der Ansprüche 1 bis 4 für ein Elektrofahrzeug, ferner aufweisend ein Trennwandteil (8) im Inneren des Troges (3) zum Abteilen eines Aufnahmeraums der Batterie,
wobei sich das Trennwandteil (8) in einer Richtung erstreckt, die eine Erstreckungsrichtung des mindestens einen äußeren Rahmens (6) schneidet und einen Endabschnitt aufweist, der mit der inneren Fläche der Seitenwand des Troges (3) Kontakt hat.

6. Batteriepack nach Anspruch 5 für ein Elektrofahrzeug,
wobei die Öffnung (6421) in einer zur Erstreckungsrichtung des Trennwandteils (8) versetzten Position angeordnet ist.

7. Batteriepack nach Anspruch 5 für ein Elektrofahrzeug,
wobei die Öffnung (6421) in einer Position angeordnet ist, die das Trennwandteil (8) in einer zur Erstreckungsrichtung des Trennwandteils (8) überlappt.

## Revendications

1. Bloc-batteries (2) pour un véhicule électrique, monté sur un véhicule électrique (1), comprenant :
un plateau (3) qui loge une batterie et qui est formé selon une forme de boîte ayant une ouverture sur un côté supérieur ; et
au moins un bâti externe (6) disposé sur un côté externe d'une surface de paroi latérale (321) du plateau (3), le bâti externe (6) s'étendant le long de la surface de paroi latérale et étant soudé sur la surface de paroi latérale afin de recouvrir la surface de paroi latérale,
dans lequel le au moins un bâti externe (6) est constitué d'un élément de plaque ou d'une combinaison d'éléments de plaque, le au moins bâti externe (6) comprenant :
une première section en saillie (61) soudée sur une surface inférieure externe du plateau (3) ;
une seconde section en saillie (62) positionnée au-dessus de la première section en saillie (61) et formée pour faire saillie vers l'extérieur à partir du plateau (3) ;
une section externe (64) raccordant la première section en saillie (61) et la seconde section en saillie (62) dans une position vers l'extérieur, espacée de la surface de paroi latérale du plateau (3) ; et
une section interne (63) s'étendant à partir de la seconde section en saillie (62) vers la première section en saillie (61) et étant soudée sur la surface de paroi latérale du plateau (3),
dans lequel la première section en saillie (61), la seconde section en saillie (62), la section externe (64) et la section interne (63) font partie d'une section transversale fermée du au moins un bâti externe (6),
dans lequel la section externe (64) comprend une ouverture (6421) faisant face à la section interne (63), et dans lequel l'ouverture (6421) est prévue pour souder la section interne (63) et la surface de paroi latérale du plateau (3) entre elles, et est formée pour avoir une taille qui permet à un pistolet de soudage (G) de soudage par points d'être inséré à travers l'ouverture (6421).

2. Bloc-batteries pour un véhicule électrique selon la revendication 1, comprenant en outre :
au moins une console (9) soudée à une surface externe de la section externe (64) afin de fermer l'ouverture (6421), la au moins une console (9) étant montée sur un élément de carrosserie de véhicule (10) qui s'étend dans une direction avant - arrière du véhicule ou une direction de largeur du véhicule du véhicule électrique (1).

3. Bloc-batteries pour un véhicule électrique selon la revendication 2,
dans lequel le au moins un bâti externe (6) est soudé à la surface de paroi latérale du plateau (3) au niveau de chacun des côtés opposés dans le sens de largeur du véhicule du plateau (3),
dans lequel l'élément de carrosserie de véhicule (10) est une traverse (10) s'étendant dans le sens de largeur du véhicule, et
dans lequel la traverse (10) est disposée dans une région inférieure du plateau (3) afin de raccorder l'une parmi la au moins une console (9) disposée d'un côté dans le sens de la largeur du véhicule du plateau (3) et l'autre parmi la au moins une console (9) disposée sur un côté opposé.

4. Bloc-batteries pour un véhicule électrique selon l'une quelconque des revendications 1 à 3, comprenant en outre :
un bâti interne (7) disposé sur une surface interne d'une paroi latérale du plateau (3), le bâti interne (7) s'étendant le long de la paroi latérale et étant soudé à la paroi latérale.

5. Bloc-batteries pour un véhicule électrique selon l'une quelconque des revendications 1 à 4, comprenant en outre une partie de séparation (8) à l'intérieur du plateau (3) pour séparer un espace de logement de la batterie,
dans lequel la partie de séparation (8) s'étend dans une direction qui coupe une direction d'extension du au moins un bâti externe (6) et a une partie d'extrémité qui est en contact avec la surface interne de la paroi latérale du plateau (3).

6. Bloc-batteries pour un véhicule électrique selon la revendication 5,
dans lequel l'ouverture (6421) est disposée dans une position décalée de la partie de séparation (8) dans une direction d'extension de la partie de séparation (8).

7. Bloc-batteries pour un véhicule électrique selon la revendication 5,
dans lequel l'ouverture (6421) est disposée dans une position chevauchant la partie de séparation (8) dans une direction d'extension de la partie de séparation (8).
